# EUROPÄISCHE PATENTSCHRIFT

(11) **EP 1 277 627 B1**
(45) Veröffentlichungstag und Bekanntmachung des Hinweises auf die Patenterteilung: **01.10.2003**
(21) Anmeldenummer: 02010631.6
(22) Anmeldetag: 11.05.2002
(51) Int. Cl.: B60R 21/20

(54) **Gasführungsrohr aus Metall für Luftsäcke von Kraftwagen und Verfahren zu dessen Herstellung**
Metal gas tube for vehicle airbags and production thereof
Tuyau métallique pour airbag d'automobile et procédé pour sa fabrication

(30) Priorität: 11.07.2001 DE 10133086
(43) Veröffentlichungstag der Anmeldung: 22.01.2003
(73) Patentinhaber: Carl Froh GmbH, 59846 Sundern (DE); AUTOLIV DEVELOPMENT AB, 447 83 Vargarda (SE)
(72) Erfinder: Cramer, Alfred, Dipl.-Ing., 59846 Sundern (DE)
(74) Vertreter: Patentanwälte Ostriga & Sonnet

(56) Entgegenhaltungen:
- EP-A- 1 050 439
- DE-A- 19 957 578
- DE-U- 20 021 673
- DE-U- 29 916 526

## Beschreibung

Die Erfindung betrifft zunächst ein Gasführungsrohr aus Metall für Luftsäcke von Kraftwagen entsprechend dem Oberbegriff des Anspruchs 1. Ein derartiges Gasführungsrohr ist beispielsweise in der DE 299 16 526 U1 dargestellt (s. dort Fig. 6 Pos. 46).

Zum Teil sind solche Gasführungsrohre derart ausgebildet, dass in deren eines Rohrende ein Kunststoff-Endstopfen mit einer radial nach außen weisenden Ringnut eingesetzt ist. Das Rohrende des aus Stahlblech bestehenden Gasführungsrohres weist zwei radial von außen her eingebrachte Ringsicken auf, welche in eine Ringnut des Kunststoff-Endstopfens befestigend eingreifen.

Außerdem weist der Kunststoff-Endstopfen eines solchen bekannten Gasführungsrohres an seinem freien Ende einen laschenartigen Fortsatz mit einer Befestigungsöse auf, welche der endseitigen Schraubbefestigung des Gasführungsrohres im fahrzeugseitigen Einbaufeld dient.

Es hat sich indessen herausgestellt, dass derartige Kunststoff-Endstopfen den beim Auslösen eines Luftsackes auftretenden Kräften nicht immer zuverlässig standhalten. Auch ist nicht auszuschließen, dass bei der Schraubbefestigung der aus Kunststoff bestehenden Befestigungsöse bereits während der Montage des Gasführungsrohres eine Vorschädigung des Kunststoffbauteils eintritt.

Der Erfindung liegt die Aufgabe zugrunde, den Endbefestigungsbereich des eingangs beschriebenen gattungsgemäßen Gasführungsrohres in fertigungstechnisch einfacher Weise hinsichtlich seiner Festigkeitseigenschaften zu verbessern.

Gemeinsam mit den Merkmalen des Oberbegriffs des Anspruchs 1 wird diese Aufgabe erfindungsgemäß dadurch gelöst, dass das Gasführungsrohr an mindestens einem Rohrende eine Abplattung aufweist, dass die beidseitigen axialen Randbereichte der Abplattung vierlagig eingefaltet sind, während der zwischen den beiden axialen Randbereichen angeordnete mittlere Axialbereich der Abplattung zweilagig eingeprägt ist, und dass die Abplattung zumindest in ihrem mittleren zweilagigen Bereich das Befestigungselement bildet.

Entsprechend der Erfindung ist ein Gasführungsrohr mit einem stoffschlüssig zusammenhängenden einteiligen Endbereich geschaffen worden, welcher ein zusätzliches Dicht- und Befestigungselement, wie z.B. einen in einem gesonderten Kunststoffspritzgießwerkzeug zu fertigenden Kunststoff-Endstopfen mit angeformter Öse, entbehrlich macht.

Durch die besondere Ausgestaltung der Abplattung, die beidseitig vierlagig eingefaltete axiale Randbereiche und in der Mitte einen zweilagig eingeprägten mittleren Axialbereich aufweist, kann die Breite der Abplattung gezielt bestimmt werden und in etwa dem Durchmesser des Gasführungsrohres entsprechen, so dass das erfindungsgemäße Gasführungsrohr fahrzeugseitig raumsparend einzubauen ist.

Außerdem ist die das Befestigungselement bildende Abplattung des erfindungsgemäßen Gasführungsrohres stoffschlüssig an den übrigen Rohrkörper des Gasführungsrohres angebunden, so dass mit der Erfindung zugleich ein optimal festangeschlossener Befestigungsbereich geschaffen wurde.

Schließlich gestattet die erfindungsgemäße Abplattung mit ihren vierlagigen Randbereichen einen hinreichend gasdichten Abschluss des Gasführungsrohres.

In weiterer Ausgestaltung der Erfindung ist das Befestigungselement von einer Befestigungsöse gebildet, welche zumindest den mittleren zweilagigen Bereich der Abplattung durchsetzt.

Eine besonders montagegünstige Befestigung des erfindungsgemäßen Gasführungsrohres wird entsprechend weiteren Erfindungsmerkmalen dadurch erzielt, dass die Abplattung sich mit einer äußeren ebenen Hauptfläche, einseitig im Radialabstand von der Längsmittelachse des Gasführungsrohres entfernt, entlang einer durch eine Mantellinie des Gasführungsrohres gelegten Tangentialebene erstreckt. Die nach außen weisende ebene Hauptfläche der Abplattung geht also flächenbündig in die angrenzende Rohr-Äußenfläche des Gasführungsrohres über.

Im einzelnen ist die vorbeschriebene Ausführungsform entsprechend zusätzlichen Erfindungsmerkmalen derart gestaltet, dass zwischen dem unverformten Rohrabschnitt und der Abplattung ein gekrümmter Übergangsabschnitt ausgebildet ist, dessen konkave Außenfläche zum freien Ende der Abplattung zeigt und dessen beidseitige Randbereiche als Fortsetzung der axialen Randbereiche ebenfalls jeweils vierlagig ausgebildet sind, während der mittlere Bereich des Übergangsabschnittes zweilagig ist.

Eine hinreichende Gasdichtigkeit des Rohrendbereichs des Gasführungsrohres wird in weiterer Ausgestaltung der Erfindung mit geringem Mehraufwand in besonderer Weise dadurch erzielt, dass die Außenfläche im Bereich der äußeren Lage des zweilagigen mittleren Axialbereichs einen Bestandteil der äußeren ebenen gesamten Hauptfläche der Abplattung bildet, während die andere Lage des zweilagigen mittleren Axialbereichs eine sich mit ihrer Längsachse axial erstreckende U-förmige Rinne bildet, welche zwischen den beiden vierlagigen axialen Randbereichen gegen die Innenfläche der äußeren Lage eingeformt ist. Dabei bildet die sich axial erstreckende U-förmige Rinne gewissermaßen einen eine Labyrinthdichtung darstellenden Riegel.

Eine vollkommene Gasdichtigkeit des Endbereichs des erfindungsgemäßen Gasführungsrohrs wird indessen dadurch erzielt, dass der sich unmittelbar an die Abplattung anschließende Endbereich des Rohrhohlraums mit einer Dichtungsmasse ausgefüllt ist.

Weiterhin sieht die Erfindung vor, dass die Dichtungsmasse ebenfalls zwischen den Innenflächen der die Abplattung bildenden verformten Rohrwand angeordnet ist.

Besonders vorteilhaft sind in diesem Zusammenhang zusätzliche Merkmale, wonach die in dem Endbereich des Rohrhohlraums befindliche Dichtungsmasse mit der zwischen den Innenflächen der die Abplattung bildenden verformten Rohrwand befindlichen Dichtungsmasse einen stoffschlüssigen Zusammenhang bildet.

Obwohl auch andere Dichtungsmassen in Frage kommen, hat sich für das erfindungsgemäße Gasführungsrohr eine Dichtungsmasse aus einem elastischen einkomponentigen Polyurethan oder aus einem plastischen Butylkautschuk als besonders vorteilhaft herausgestellt.

Die Erfindung betrifft außerdem ein Verfahren zur Herstellung eines Gasführungsrohres aus Metall für Luftsäcke von Kraftwagen, an dessen zumindest einem Rohrende eine Abdichtungseinrichtung mit einem Befestigungselement zur endseitigen Anbringung des Gasführungsrohres im fahrzeugseitigen Einbaufeld ausgebildet wird.

Entsprechend der Erfindung wird ein fertigungsgünstiges Verfahren zur Herstellung eines hinsichtlich seiner Befestigung sicheren Rohrendes eines Gasführungsrohres dadurch geschaffen, dass von außen her in die Wand des Rohrendes an zwei einander diametral gegenüberliegenden Mantellinien jeweils eine im Querschnitt etwa V-förmige Axialsicke radial nach innen eingedrückt wird, worauf die Rohrwand an mindestens einer anderen, bezüglich der V-förmigen Axialsicken um 90° umfangswinkelversetzen, Mantellinie von außen her radial angepresst wird, während die Rohrwandbereiche mit den beiden V-förmigen Sicken außenseitig radial abgestützt werden.

Eine mit der äußeren Rohrmantelfläche bündige Abplattung wird in weiterer Ausgestaltung des Verfahrens dadurch erzielt, dass die Rohrwand nur an einer bezüglich der beiden V-förmigen Axialsicken um 90° umfangswinkelversetzen Mantellinie von außen her radial angepresst wird, während die Rohrwand an der diametral entgegengesetzten Mantellinie auf einem ebenen Widerlager ruht.

Weitere Verfahrensmerkmale sehen vor, dass nach der Herstellung der Abplattung durch letztere hindurch eine Befestigungsaussparung, die Befestigungsöse nämlich, gestanzt wird.

Eine wirkungsvolle und zudem fertigungsgünstige Einbringung der Dichtungsmasse wird entsprechend zusätzlichen erfindungsgemäßen Verfahrensmerkmalen dadurch bewirkt, dass vor der Umformung des Rohrendes in letzteres zunächst Dichtungsmasse eingefüllt wird und die Dichtungsmasse gemeinsam mit der Herstellung der Abplattung zwischen den verformten Rohrwandlagen angepresst wird.

In den Zeichnungen sind ein bevorzugtes Ausführungsbeispiel entsprechend der Erfindung und das Verfahren zur Herstellung eines Endbereichs eines Gasführungsrohres dargestellt, es zeigt
Fig. 1 in räumlicher Darstellung die verschiedenen Fertigungsstufen bei einem Rohrende eines Gasführungsrohres,
Fig. 2 die zu den einzelnen Fertigungsstufen gemäß Fig. 1 gehörenden Querschnitte durch das zu verformende bzw. durch das verformte Rohrende,
Fig. 3 die zu den einzelnen Querschnitten gemäß Fig. 2 gehörenden Ansichten auf die Rohrenden,

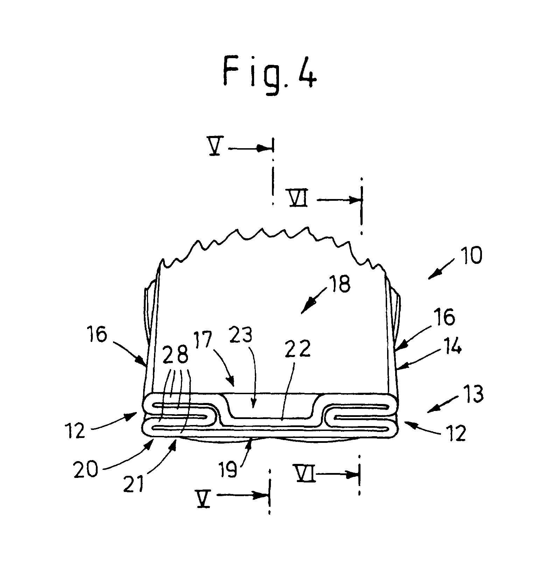

Fig. 4 einen vergrößerten abgebrochen dargestellten Detailbereich gemäß der in Fig. 2 mit IV bezeichneten Einkreisung und
Fig. 5 und 6 im Vergleich zu den Darstellungen gemäß den Fig. 1-3 vergrößerte Längsschnitte entsprechend den in Fig. 4 mit V-V und VI-VI bezeichneten Schnittlinien.

In den Zeichnungen ist jedes gesamte Rohrende eines Gasführungsrohres unabhängig von seinem jeweiligen Umformungszustand durchgehend mit der Bezugsziffer 10 bezeichnet.

Eine Stufe 0 geht aus von einem längsnahtgeschweißten innen und außen mit einer antikorrosiven Beschichtung versehenen Stahlrohr aus einem günstig kaltverformbaren Werkstoff.

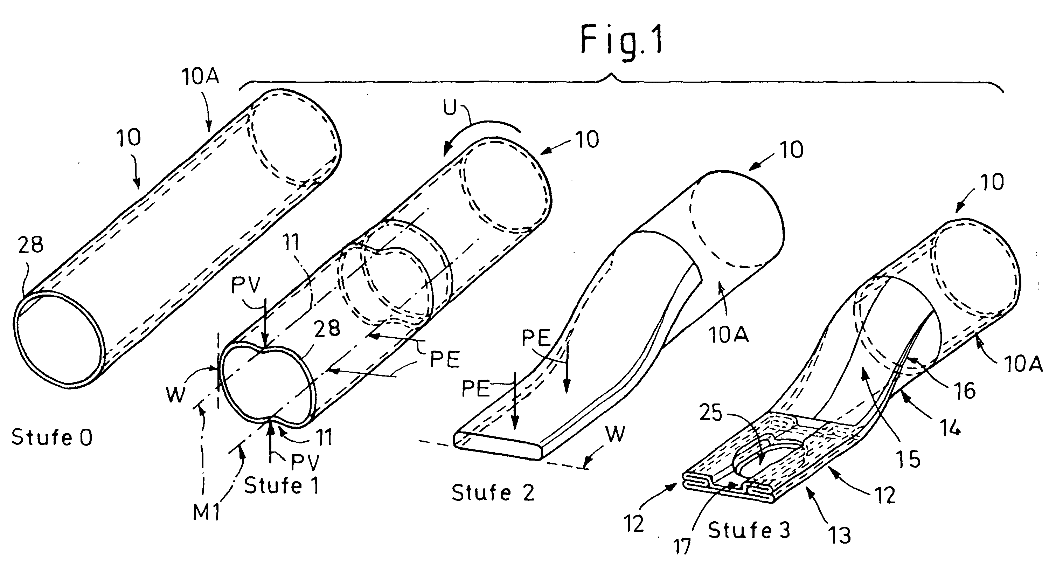

Entsprechend der Stufe 0 der Fig. 1-3 weist das Rohrende 10 einen kreisrunden, gegebenenfalls auch elliptischen, Querschnitt auf.

Gemäß der Verfahrensstufe 1 werden an diametral gegenüberliegenden Mantellinien M1 nach innen gerichtete Axialsicken 11 mit etwa V-förmigem Querschnitt entsprechend den mit Pfeilen und den Bezeichnungen PV kenntlich gemachten Verformungskräften in die Rohrwand 28 eingedrückt. Die Herstellung dieser V-förmigen Sicken 11 ist sehr wichtig, weil die Sicken 11 die Verformungsrichtung bei der Herstellung der vierlagigen axialen Randbereiche 12 vorbestimmen.

Vor dem Übergang in die Stufe 2 wird das in der Verfahrensstufe 1 dargestellte Rohrende 10 entgegen dem Urzeigersinn entsprechend dem mit u bezeichneten Umfangspfeil um 90° gewendet, so dass das Rohrende 10 mit seiner unteren Rohraußenmantelfläche auf einem ebenen Widerlager W ruht.

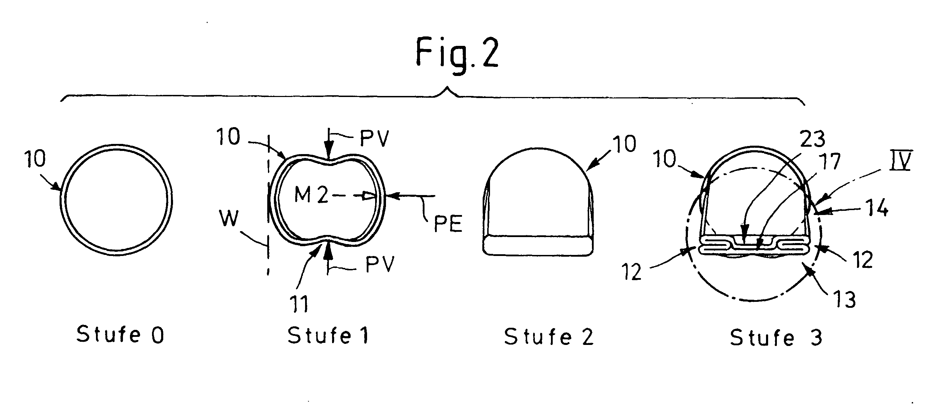

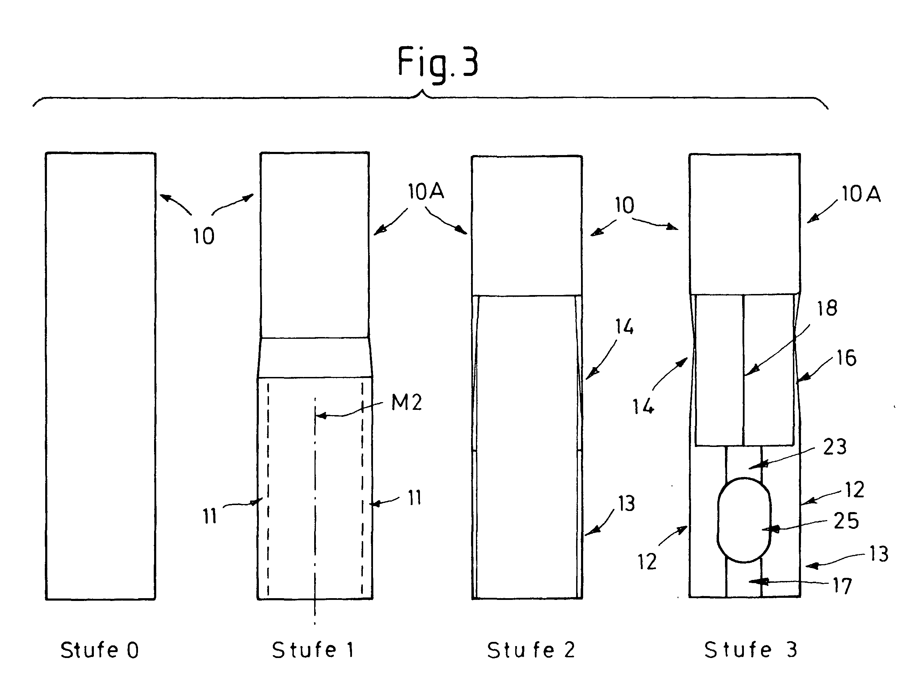

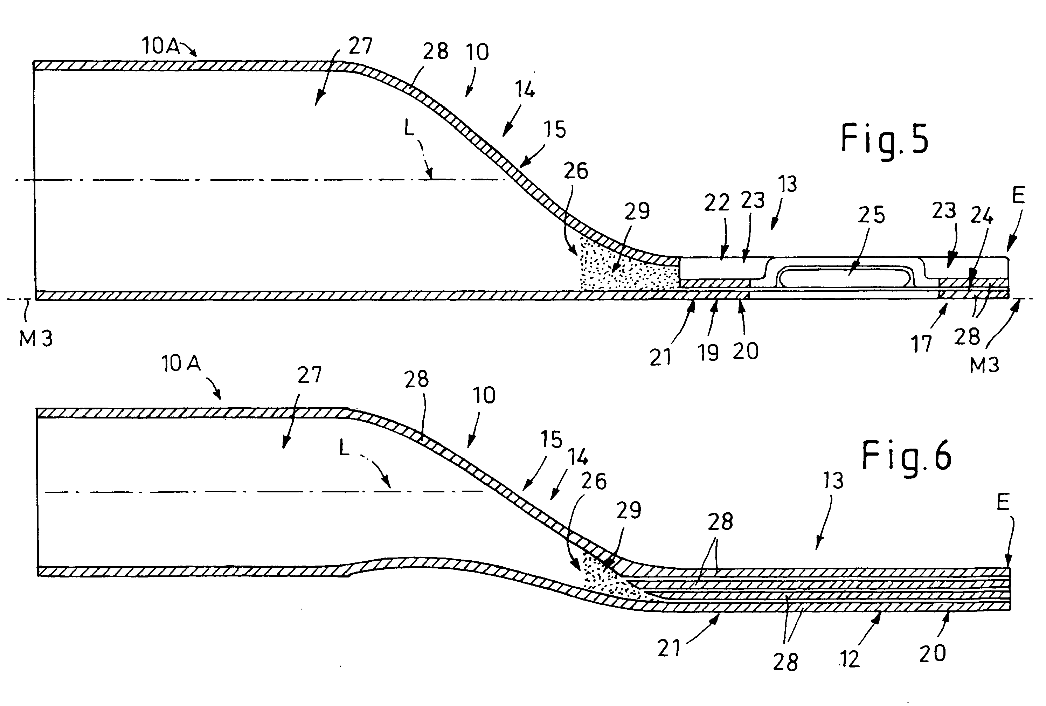

Sodann wird auf der der ebenen Widerlagerfläche W abgewandten Seite der Außenmantelfläche des Rohrendes 10 entlang einer in den Fig. 2 und 3 angedeuteten Mantellinie M2, welche gegenüber den beiden Mantellinien M1 bzw. gegenüber den Sicken 11 um 90° umfangswinkelversetzt ist, ein Endverformungsdruck PE einseitig auf das Rohrende 10 ausgeübt. Dies hat zur Folge, dass sich radial einseitig neben der Längsmittellinie L (s. Fig. 5 und 6) des Rohrendes 10 etwa bündig mit einer Mantellinie M3 eine Abplattung 13 ausbildet.

Während der Endverformungsdruck PE ausgeübt wird, werden die beiden diametral gegenüberliegenden Rohrwandbereiche mit den V-förmigen Axialsicken 11 außenseitig radial in flächiger Weise abgestützt.

Zwischen dem unverformten Rohrabschnitt 10A und der Abplattung 13 ist ein gekrümmter Übergangsabschnitt 14 ausgebildet, dessen konkave Außenfläche 15 zum freien Ende E der Abplattung 13 zeigt und dessen beidseitige Randbereiche 16 als Fortsetzung der axialen Randbereiche 12 ebenfalls vierlagig ausgebildet sind, während der mittlere Bereich 18 des Übergangsabschnittes 14 ebenso wie der mittlere Axialbereich 17 der Abplattung 13 zweilagig ist.

Die Außenfläche 19 der äußeren Lage 20 im Bereich des zweilagigen mittleren Axialbereichs 17 bildet einen Bestandteil der äußeren ebenen gesamten Hauptfläche 21 der Abplattung 13, während die innere Lage 22 des zweilagigen mittleren Axialbereichs 17 eine sich mit ihrer Längsachse axial erstreckende U-förmige Rinne 23 bildet. Die Rinne 23 erstreckt sich zwischen den beiden vierlagigen axialen Randbereichen 12 und ist gegen die Innenfläche 24 der äußeren Lage 20 gedrückt.

Eine etwa langlochartige Befestigungsöse 25 durchsetzt die Abplattung 13, und zwar sowohl den zweilagigen mittleren Axialbereich 17 als auch anrandend teilweise die daran beidseitig angrenzenden vierlagigen axialen Randbereiche 12.

Der sich unmittelbar an die Abplattung 13 anschließende Endbereich 26 des Rohrhohlraums 27 ist mit einer Dichtungsmasse 29 ausgefüllt, welche in nicht dargestellter Weise ebenfalls zwischen den Innenflächen der die Abplattung bildenden verformten Rohrwand 28 angeordnet ist.

Bei der Durchführung des Herstellungsverfahrens wird die Dichtungsmasse 29 zunächst in. das offene Rohrende 10 entweder der Stufe 0 oder der Stufe 1 eingefüllt und sodann gemeinsam mit der Herstellung der Abplattung 13 verpresst. Auf diese Weise befindet sich die Dichtungsmasse 29 auch zwischen den Innenflächen der verformten Rohrwand 28 und hängt zudem mit der im Endbereich 26 angeordneten Dichtungsmasse 29 stoffschlüssig zusammen.

## Patentansprüche

1. Gasführungsrohr aus Metall für Luftsäcke von Kraftwagen, welches zumindest an einem Rohrende (10) eine Abdichtungseinrichtung (13) aufweist, die außerdem ein Befestigungselement (25) zur endseitigen Anbringung des Gasführungsrohres im fahrzeugseitigen Einbaufeld bildet, **dadurch gekennzeichnet, dass** das Gasführungsrohr an mindestens einem Rohrende (10) eine Abplattung (13) aufweist, dass die beidseitigen axialen Randbereiche (12) der Abplattung (13) vierlagig eingefaltet sind, während der zwischen den beiden axialen Randbereichen (12) angeordnete mittlere Axialbereich (17) der Abplattung (13) zweilagig eingeprägt ist, und dass die Abplattung (13) zumindest in ihrem mittleren zweilagigen Bereich (17) das Befestigungselement (25) bildet.

2. Gasführungsrohr nach Anspruch 1, **dadurch gekennzeichnet, dass** eine zumindest den mittleren zweilagigen Bereich (17) der Abplattung (13) durchsetzende Befestigungsöse (25) das Befestigungselement bildet.

3. Gasführungsrohr nach Anspruch 1 oder nach Anspruch 2, **dadurch gekennzeichnet, dass** die Abplattung (13) sich mit einer äußeren ebenen Hauptfläche (21), einseitig im Radialabstand von der Längsmittelachse (L) des Gasführungsrohres entfernt, entlang einer durch eine Mantellinie (M3) des Gasführungsrohres gelegten Tangentialebene erstreckt.

4. Gasführungsrohr nach Anspruch 3, **dadurch gekennzeichnet, dass** zwischen dem unverformten Rohrabschnitt (10A) und der Abplattung (13) ein gekrümmter Übergangsabschnitt (14) ausgebildet ist, dessen konkave Außenfläche (15) zum freien Ende (E) der Abplattung (13) zeigt und dessen beidseitige Randbereiche (16) als Fortsetzung der axialen Randbereiche (12) ebenfalls jeweils vierlagig ausgebildet sind, während der mittlere Bereich (18) des Übergangsabschnittes (14) zweilagig ist.

5. Gasführungsrohr nach Anspruch 3 oder nach Anspruch 4, **dadurch gekennzeichnet, dass** die Außenfläche (19) der äußeren Lage (20) im Bereich des zweilagigen mittleren Axialbereichs (17) einen Bestandteil der äußeren ebenen gesamten Hauptfläche (21) der Abplattung (13) bildet, während die innere Lage (22) des zweilagigen mittleren Axialbereichs (17) eine sich mit ihrer Längsachse axial erstreckende U-förmige Rinne (23) bildet, welche zwischen den beiden vierlagigen axialen Randbereichen (12) gegen die Innenfläche (24) der äußeren Lage (20) eingeformt ist.

6. Gasführungsrohr nach einem der Ansprüche 1 bis 5, **dadurch gekennzeichnet, dass** der sich unmittelbar an die Abplattung (13) anschließende Endbereich (26) des Rohrhohlraums (27) mit einer Dichtungsmasse (29) ausgefüllt ist.

7. Gasführungsrohr nach Anspruch 6, **dadurch gekennzeichnet, dass** die Dichtungsmasse (29) ebenfalls zwischen den Innenflächen der die Abplattung (13) bildenden verformten Rohrwand (28) angeordnet ist.

8. Gasführungsrohr nach Anspruch 6 oder nach Anspruch 7, **dadurch gekennzeichnet, dass** die Dichtungsmasse (29) aus einem elastischen, einkomponentigen Polyurethan oder aus plastischem Butylkautschuk besteht.

9. Verfahren zur Herstellung eines Gasführungsrohres aus Metall für Luftsäcke von Kraftwagen, an dessen zumindest einem Rohrende (10) eine Abdichtungseinrichtung (13) mit einem Befestigungselement (25) zur endseitigen Anbringung des Gasführungsrohres im fahrzeugseitigen Einbaufeld ausgebildet wird, **dadurch gekennzeichnet, dass** von außen her in die Wand (28) des Rohrendes (10) an zwei einander diametral gegenüberliegenden Mantellinien (M1) jeweils eine im Querschnitt etwa V-förmige Axialsicke (11) radial nach innen eingedrückt wird, worauf die Rohrwand (28) an mindestens einer anderen, bezüglich der V-förmigen Axialsicken um 90° umfangswinkelversetzten, Mantellinie (M2) von außen her radial angepresst wird, während die Rohrwandbereiche mit den beiden V-förmigen Sicken (11) außenseitig radial abgestützt werden.

10. Verfahren nach Anspruch 9, **dadurch gekennzeichnet, dass** die Rohrwand (28) nur an einer bezüglich der beiden V-förmigen Axialsicken (11) um 90° umfangswinkelversetzten Mantellinie (M2) von außen her radial angepresst wird, während die Rohrwand (28) an der diametral entgegengesetzten Mantellinie auf einem ebenen Widerlager (W) ruht.

11. Verfahren nach Anspruch 9 oder nach Anspruch 10, **dadurch gekennzeichnet, dass** nach der Herstellung der Abplattung (13) durch letztere hindurch eine Befestigungsaussparung (25) gestanzt wird.

12. Verfahren nach einem der Ansprüche 9 bis 11, **dadurch gekennzeichnet, dass** vor der Umformung des Rohrendes (10) in letzteres zunächst Dichtungsmasse (29) eingefüllt wird und die Dichtungsmasse (29) gemeinsam mit der Herstellung der Abplattung (13) zwischen den verformten Rohrwandlagen (28) angepresst wird.

## Claims

1. Gas-containing tube made of metal for airbags of motor vehicles, which comprises at least at one tube end (10) a sealing device (13), which moreover forms a fastening element (25) for the final mounting of the gas-containing tube in the installation site of the vehicle, **characterized in that** the gas-containing tube at least at one tube end (10) has a flattened portion (13), that the axial edge regions (12) on either side of the flattened portion (13) are folded into four layers, while the central axial region (17) disposed between the two axial edge regions (12) of the flattened portion (13) is embossed to form two layers, and that the flattened portion (13) at least in its central two-layered region (17) forms the fastening element (25).

2. Gas-containing tube according to claim 1, **characterized in that** a fastening eye (25), which penetrates at least the central two-layered region (17) of the flattened portion (13), forms the fastening element.

3. Gas-containing tube according to claim 1 or according to claim 2, **characterized in that** the flattened portion (13) extends with an outer flat main surface (21), which is disposed at one side radially remote from the longitudinal centre line (L) of the gas-containing tube, along a tangential plane defined by a surface line (M3) of the gas-containing tube.

4. Gas-containing tube according to claim 3, **characterized in that** between the non-deformed tube portion (10A) and the flattened portion (13) a curved transition portion (14) is formed, the concave outer surface (15) of which is directed towards the free end (E) of the flattened portion (13) and the edge regions (16) on either side of which are each likewise of a four-layered design as a continuation of the axial edge regions (12), while the central region (18) of the transition portion (14) is two-layered.

5. Gas-containing tube according to claim 3 or according to claim 4, **characterized in that** the outer surface (19) of the outer layer (20) in the region of the two-layered central axial region (17) forms a component part of the outer flat total main surface (21) of the flattened portion (13), while the inner layer (22) of the two-layered central axial region (17) forms a U-shaped channel (23), the longitudinal axis of which extends axially and which is formed between the two four-layered axial edge regions (12) and in towards the inner surface (24) of the outer layer (20).

6. Gas-containing tube according to one of claims 1 to 5, **characterized in that** the end region (26) of the tube cavity (27) immediately adjoining the flattened portion (13) is filled with a sealing compound (29).

7. Gas-containing tube according to claim 6, **characterized in that** the sealing compound (29) is disposed likewise between the inner surfaces of the deformed tube wall (28), which forms the flattened portion (13).

8. Gas-containing tube according to claim 6 or according to claim 7, **characterized in that** the sealing compound (29) comprises an elastic, one-component polyurethane or soft butyl rubber.

9. Method of manufacturing a gas-containing tube made of metal for airbags of motor vehicles, on the at least one tube end (10) of which a sealing device (13) with a fastening element (25) is formed for the final mounting of the gas-containing tube in the installation site of the vehicle, **characterized in that** at each of two diametrically opposite surface lines (M1) of the wall (28) of the tube end (10) an, in cross section, approximately V-shaped axial crease (11) is impressed radially from the outside, then pressure is applied radially from the outside upon the tube wall (28) at least at one other surface line (M2), which is offset relative to the V-shaped axial creases by an angle at circumference of 90°, while the tube wall regions having the two V-shaped creases (11) are supported radially at the outside.

10. Method according to claim 9, **characterized in that** pressure is applied radially from the outside upon the tube wall (28) only at a surface line (M2), which is offset relative to the two V-shaped axial creases (11) by an angle at circumference of 90°, while the tube wall (28) at the diametrically opposite surface line rests against a flat abutment (W).

11. Method according to claim 9 or according to claim 10, **characterized in that** after manufacture of the flattened portion (13) a fastening recess (25) is punched through said flattened portion.

12. Method according to one of claims 9 to 11, **characterized in that** sealing compound (29) is first introduced into the tube end (10) prior to reshaping of the latter and the sealing compound (29) is injected between the deformed tube wall layers (28) jointly with manufacture of the flattened portion (13).

## Revendications

1. Tube de guidage de gaz en métal pour des sacs pneumatiques de sécurité d'automobile, présentant au moins à une extrémité de tube (10) un dispositif d'étanchéité (13), qui forme en outre un élément de fixation (25) pour le montage côté extrémité du tube de guidage de gaz dans la zone de montage côté véhicule, **caractérisé en ce que** le tube de guidage de gaz présente, en au moins une extrémité de tube (10), un aplatissement (13), **en ce que** les zones de bordure axiale (12), situées de part et d'autre de l'aplatissement (13), sont pliées en quatre couches, tandis que la zone axiale médiane (17), disposée entre les deux zones de bordure axiale (12) de l'aplatissement (13), est façonnée en deux couches, et **en ce que** l'aplatissement (13) forme, au moins dans sa zone à deux couches médianes (17), l'élément de fixation (25).

2. Tube de guidage de gaz selon la revendication 1, **caractérisé en ce qu'**un oeillet de fixation (25), traversant au moins la zone médiane (17) à deux couches de l'aplatissement (13), forme l'élément de fixation.

3. Tube de guidage de gaz selon la revendication 1 ou la revendication 2, **caractérisé en ce que** l'aplatissement (13) s'étend par une surface principale (21) plane extérieure, sur un côté à distance radiale de l'axe longitudinal (L) du tube de guidage de gaz, le long d'un plan tangentiel passant par une ligne d'enveloppe (M3) du tube de guidage de gaz.

4. Tube de guidage de gaz selon la revendication 3, **caractérisé en ce que**, entre le tronçon tubulaire (10A) non déformé et l'aplatissement (13), est réalisé un tronçon de transition (14) incurvé, dont la face extérieure (15) concave est tournée vers l'extrémité libre (E) de l'aplatissement (13) et dont les zones de bordure (16) situées de part et d'autre sont réalisées également chaque fois à quatre couches, à titre de prolongement des zones de bordure axiale (12), tandis que la zone médiane (18) du tronçon de transition (14) est à deux couches.

5. Tube de guidage de gaz selon la revendication 3 ou la revendication 4, **caractérisé en ce que** la face extérieure (19) de la couche extérieure (20) forme, dans la région de la zone axiale médiane (17) à deux couches, un composant de la face principale (21) globale plane extérieure de l'aplatissement (13), tandis que la couche intérieure (22) de la zone axiale médiane (17) à deux couches forme une goulotte en forme de U (23), dont l'axe longitudinal s'étend axialement, goulotte creusée entre les deux zones de bordure (12) axiales à quatre couches, contre la face intérieure (24) de la couche extérieure (20).

6. Tube de guidage de gaz selon l'une des revendications 1 à 5, **caractérisé en ce que** la zone d'extrémité (26), se raccordant directement à l'aplatissement (13) de l'espace creux tubulaire (27), est remplie d'une masse d'étanchéité (29).

7. Tube de guidage de gaz selon la revendication 6, **caractérisé en ce que** la masse d'étanchéité (29) est également disposée entre les faces intérieures de la paroi tubulaire (28) déformée, formant l'aplatissement (13).

8. Tube de guidage de gaz selon la revendication 6 ou la revendication 7, **caractérisé en ce que** la masse d'étanchéité (29) est formée d'un polyuréthane à un seul composant, élastique, ou d'un caoutchouc au butyl, plastique.

9. Procédé de fabrication d'un tube de guidage de gaz en métal pour des sacs gonflables de sécurité de véhicules, sur au moins une extrémité de tube (10) duquel un dispositif d'étanchéité (13), ayant un élément de fixation (25) pour le montage côté extrémité du tube de guidage de gaz dans la zone de montage située côté véhicule, est formé, **caractérisé en ce que**, depuis l'extérieur dans la paroi (28) de l'extrémité de tube (10), sur deux lignes d'enveloppe (M1) diamétralement opposées l'une à l'autre, est chaque fois creusée, radialement vers l'intérieur, une moulure axiale (11) à section transversale à peu près en forme de V, suite à quoi la paroi tubulaire (28) est pressée radialement depuis l'extérieur en au moins une autre ligne d'enveloppe (M2) décalée angulairement en périphérie d'un angle de 90° par rapport aux moulures axiales en V, tandis que les zones de paroi tubulaire ayant les deux moulures (11) en forme de V sont soutenues radialement du côté extérieur.

10. Procédé selon la revendication 9, **caractérisé en ce que** la paroi tubulaire (28) n'est pressée radialement depuis l'extérieur que sur une ligne d'enveloppe (M2) décalée angulairement en périphérie d'une valeur de 90° par rapport aux deux moulures axiales en forme de V (11), tandis que la paroi tubulaire (28) repose sur un contre-appui (W) plan sur la ligne d'enveloppe diamétralement opposée.

11. Procédé selon la revendication 9 ou la revendication 10, **caractérisé en ce que**, après fabrication de l'aplatissement (13), on procède à travers ce dernier à l'estampage d'une cavité de fixation (25).

12. Procédé selon l'une des revendications 9 à 11, **caractérisé en ce que**, avant de procéder au reformage de l'extrémité de tube (10) dans ce dernier, on introduit d'abord une masse d'étanchéité (29) et cette masse d'étanchéité (29) est pressée, conjointement avec la fabrication de l'aplatissement (13), entre les couches de paroi tubulaire (28) déformées.
